# EUROPÄISCHE PATENTANMELDUNG

(11) **EP 0 803 470 A1**
(43) Veröffentlichungstag der Anmeldung: **29.10.1997**
(21) Anmeldenummer: 97106613.9
(22) Anmeldetag: 22.04.1997
(51) Int. Cl.: C01C 3/02, B01J 23/40, B01J 27/24, B01J 37/02

(54) **Verfahren zur Herstellung katalytisch wirksamer Beschichtungen für die Synthese von Cyanwasserstoff**

(30) Priorität: 27.04.1996 DE 19617040
(71) Anmelder: Degussa Aktiengesellschaft, 60311 Frankfurt (DE)
(72) Erfinder: von Hippel, Lukas, Dr., 63755 Alzenau (DE); Bussek, Christian, Dr., 53121 Bonn (DE); Sauer, Jörg, Dr., 63517 Rodenbach (DE); Sauer, Manfred, Dr., 63517 Rodenbach (DE); Arntz, Dietrich, Dr., 63829 Oberursel (DE)

(57) **Zusammenfassung**

Die Erfindung betrifft ein Verfahren zur Herstellung katalytisch wirksamer Beschichtungen für die Synthese von Cyanwasserstoff auf Formkörpern aus im wesentlichen Aluminiumoxid. Die katalytisch wirksamen Beschichtungen enthalten als aktive Komponenten mindestens ein Platinmetall und ein Nitrid, welche mittels einer Beschichtungsdispersion auf die Formkörper aufgebracht werden, die die aktiven Komponenten als feinteilige Feststoffe enthalten. Dadurch entfällt die bisher übliche Bildung von Aluminiumnitrid während des Formiervorganges. Die Beschichtungen erreichen daher sehr schnell ihr endgültiges Aktivitätsniveau, welches deutlich über dem konventioneller Beschichtungen liegt. Zusätzlich können diese Katalysatoren unter hoher Last angefahren werden und haben eine niedrigere Betriebstemperatur.

## Beschreibung

Gegenstand der Erfindung ist ein Verfahren zur Herstellung katalytisch wirksamer Beschichtungen auf der Oberfläche von Formkörpern für die Synthese von Cyanwasserstoff aus Kohlenwasserstoff und Ammoniak, wobei die katalytisch wirksame Schicht Nitride und mindestens ein Platinmetall enthält.

Nach dem sogenannten BMA-Verfahren werden niedere Kohlenwasserstoffe, insbesondere Methan, mit Ammoniak bei Temperaturen von etwa 1000 bis 1350°C in Gegenwart eines Katalysators zu Cyanwasserstoff (HCN) und Wasserstoff umgesetzt (siehe Ullmann's Encyclopedia of Industrial Chemistry, 5th Edition 1987, Vol. A 8, 162 - 163). Üblicherweise erfolgt die stark endotherme Umsetzung in Rohrreaktoren. Die innere Oberfläche der in einem BMA-Rohrreaktor hängend angeordneten und von außen beheizten Reaktionsrohre aus im wesentlichen Aluminiumoxid ist mit einer katalytisch wirksamen Beschichtung versehen.

Gemäß dem Verfahren der DE-A 10 13 636 werden die Reaktionsgase über Katalysatoren geleitet, welche neben einem oder mehreren Platinmetallen, insbesondere Platin noch Aluminium oder Elemente der Lanthaniden, einzeln oder zu mehreren im wesentlichen in Form ihrer Nitride enthalten. Eine bevorzugte katalytisch wirksame Beschichtung auf Formkörpern aus Aluminiumoxid enthält Platin und Aluminiumnitrid. die katalytisch aktiven Komponenten bei 600 bis 900°C mit Wasserstoff reduziert. Die Bildung des Nitrids erfolgte im BMA-Reaktor in der Anlaufphase unter der Einwirkung des für die HCN-Synthese benutzten Ammoniaks. Die Anlaufphase, nach der der Katalysator erst seine volle Leistungsfähigkeit erreichte, betrug etwa 25 Stunden.

Ein wesentlich verbessertes Verfahren zur Herstellung der katalytisch aktiven Beschichtung wird in der DE 39 23 034 C2 beschrieben. Gemäß dieser Patentschrift werden die Oberflächen der Formkörper mit einer Dispersion benetzt, welche als Beschichtungskomponenten teilchenförmiges elementares Platinmetall und teilchenförmiges elementares Aluminium mit einem Teilchendurchmesser von jeweils im wesentlichen weniger als 100 µm enthält. Die so behandelten Oberflächen werden zur Überführung der Beschichtung in den katalytisch wirksamen Zustand (im folgenden auch als Formierung bezeichnet) in Gegenwart von Stickstoff und/oder Ammoniak langsam auf die Reaktionstemperatur des BMA-Verfahrens von 1000 bis 1350°C aufgeheizt. Verwendet man während des Aufheizens Ammoniak, so ist bei Erreichen der Reaktionstemperatur der Katalysator wirksam formiert.

Aufgabe der vorliegenden Erfindung ist es, ein Verfahren zur Herstellung katalytisch wirksamer Beschichtungen auf der Oberfläche von Formkörpern aus im wesentlichen Aluminiumoxid für die Synthese von Cyanwasserstoff anzugeben, welches katalytisch aktive Beschichtungen liefert, die eine höhere katalytische Aktivität als die herkömmlichen Beschichtungen aufweisen und in sehr kurzer Zeit mit den hohen Eduktströmen des stationären Betriebs belastet werden können.

Gelöst wird diese Aufgabe durch ein Verfahren zur Herstellung katalytisch wirksamer Beschichtungen auf der Oberfläche von keramischen Formkörpern für die Synthese von Cyanwasserstoff aus Kohlenwasserstoff und Ammoniak durch gleichmäßiges Benetzen der Formkörper mit einer Beschichtungsdispersion, welche mindestens ein teilchenförmiges elementares Platinmetall und eine weitere Beschichtungskomponente in einer Tragerflüssigkeit enthält, Abdampfen der Trägerflüssigkeit und Überführen der Beschichtung in den katalytisch wirksamen Zustand durch langsames Aufheizen in Gegenwart von Stickstoff und/oder Ammoniak auf 1000 bis 1350°C.

Das Verfahren ist dadurch gekennzeichnet, daß als weitere Beschichtungskomponente teilchenförmige Nitride mit den Elementen Aluminium, Bor, Titan und Silizium als Kationen allein oder in Mischung verwendet werden, wobei die teilchenförmigen Komponenten mittlere Teilchendurchmesser von im wesentlichen weniger als 100 µm aufweisen.

Die in der Dispersion enthaltenen Metalle und Nitride weisen Teilchendurchmesser von weniger als 100 µm, vorzugsweise weniger als 50 µm, auf. Beschichtungsdispersionen mit möglichst kleinen Teilchendurchmessern werden bevorzugt, da solche Dispersionen zu geringerer Absetzung der Teilchen neigen.

Unter den Platinmetallen, also Rhodium, Ruthenium, Palladium, Osmium, Iridium und Platin, wird Platin bevorzugt. Die Platinmetalle sind zum Beispiel durch Reduktion von Lösungen ihrer Verbindungen in einfacher Weise in feinverteilter elementarer Form zugänglich, wobei die sogen. Mohre der Platinmetalle besonders bevorzugt im erfindungsgemäßen Verfahren eingesetzt werden. Platinmohre sind im Handel erhältlich.

Nitride werden in der Regel aus den jeweiligen Elementen und Ammoniak und/oder Stickstoff hergestellt (z.B. G. Selvaduray und L. Sheet, Mater. Sci. Technol., 9 (1993), 463-473). Dazu können andere Elemente, wie z.B. Lithium zugesetzt werden, die die Reaktion katalysieren. Die so erhältlichen Pulver sind im Handel von verschiedenen Herstellern in unterschiedlichen Qualitäten und Reinheiten verfügbar.

Für die katalytische Beschichtung können Nitride des Aluminiums, des Bors, des Titans und des Siliziums allein oder in Mischung verwendet werden. Bevorzugt wird Aluminiumnitrid eingesetzt.

Als Lösungsmittel zur Herstellung der Beschichtungsdispersion eignen sich zum Beispiel organische Lösungsmittel, wie aliphatische und aromatische Kohlenwasserstoffe, Ester, Ketone oder Alkohole und Gemische solcher Lösungsmittel. Lösungsmittel oder Gemische mit einem Siedepunkt beziehungsweise Siedepunktbereich unter 350°C, insbesondere unter 150°C, eignen sich gut. Besonders bevorzugte Trägerflüssigkeiten sind niedere Alkohole und aromatische und nicht aromatische Kohlenwasserstoffe.

Die Feststoffkonzentration der Dispersion kann in weiten Grenzen variieren, sofern die Dispersion die gewünschte Verarbeitungsviskosität aufweist. Im allgemeinen enthalten die Dispersionen 10 bis 300 Gew.% Metallpulver und Nitrid-Pulver, bevorzugt 30 bis 200 und insbesondere 50 bis 150 Gew.-%, bezogen auf die Trägerflüssigkeit.

Durch Einstellung der Konzentration an Metallpulver und Nitrid-Pulver in der Dispersion gelingt es, mit einem einzigen Beschichtungsschritt die für eine hohe Standzeit des beschichteten Formkörpers erforderliche Menge Platinmetall und Nitrid aufzutragen. Ein Gehalt von weniger als 10 mg Platinmetall pro cm² der katalytisch wirksamen Oberfläche ist völlig ausreichend. Bevorzugt wird eine Flächenkonzentration von 0,05 bis 5 mg Pt/cm², insbesondere 0,1 bis 2 mg/cm².

In der Dispersion beträgt das Atomverhältnis der Platinmetalle zu den Kationen der Nitride 0,001 bis 1 : 1. Bevorzugt wird ein Verhältnis im Bereich von 0,01 bis 0,5 : 1 eingestellt. Ein Pt/Kationen-Verhältnis im Bereich von 0,01 bis 0,1 ist besonders geeignet.

Nach dem Abdampfen der Trägerflüssigkeit der Dispersion werden die beschichteten Formkörper in Gegenwart von Stickstoff und/oder Ammoniak langsam auf 1000 bis 1350°C aufgeheizt. Die Aufheizdauer ist im wesentlichen vom verwendeten Ofen und den Eigenschaften der Formkörper abhängig. Üblicherweise wird innerhalb von 2 bis 20 Stunden, meist 5 bis 15 Stunden, auf die BMA-Reaktionstemperatur aufgeheizt. Nach einer weiteren Behandlungsdauer von 2 bis 10 Stunden bei der Reaktionstemperatur ist die Formierung des Katalysators abgeschlossen.

Im konventionellen Herstellverfahren wird während der Formierung im Temperaturbereich zwischen 600 und 1000°C unter anderem Aluminiumnitrid gebildet. Dagegen entfällt im erfindungsgemäßen Verfahren durch die Verwendung von Nitriden in der Beschichtungsdispersion die Bildung der Nitride während des Formiervorganges.

Direkt nach der Formierung kann zur Synthese von Cyanwasserstoff ohne Unterbrechung der Ammoniakzufuhr mit der Zugabe von Methan begonnen werden. Gegebenenfalls wird der Ammoniakstrom vorher auf den für den stationären Betrieb gewünschten Wert eingestellt. Die Zugabe von Methan wird kontinuierlich erhöht, bis ein Molverhältnis des Methanflusses zum Ammoniakfluß von 0,8 bis 0,99, erreicht ist. Das Molverhältnis Methan/Ammoniak wird unterstöchiometrisch gewählt, um einer Rußbildung entgegenzuwirken, die den Katalysator desaktivieren würde. Die Steigerungsrate für die Methanzufuhr bis zum stationären Betrieb wird daher so geregelt, daß gerade keine Rußbildung auftritt.

Bei konventionell hergestellten Katalysatorbeschichtungen kann diese Anfahrphase insbesondere bei hohen Eduktströmen mehrere Tage in Anspruch nehmen. Bei der erfindungsgemäß hergestellten Katalysatorbeschichtung kann der stationäre Zustand jedoch schon nach wenigen Stunden erreicht werden, ohne daß eine Rußbildung beobachtet wird.

Die Beschichtungsdispersion kann außer den erfindungswesentlichen Komponenten in der Trägerflüssigkeit lösliche und/oder unlösliche Hilfsmittel enthalten, um zum Beispiel die Sedimentation zu verzögern und/oder die Verarbeitungsviskosität einzustellen sowie die Haftung der Beschichtung auf dem Formkörper vor und/oder nach der Formierung des Katalysators zu verbessern.

Solche Hilfsmittel können polymere organische Lackbindemittel sein, welche während der Formierung des Katalysators rückstandsfrei abgebaut werden, beispielsweise Polyacrylate, Polyesterharze, Polyurethane. Die bei der Lackherstellung üblichen Hilfsstoffe, wie organische und/oder anorganische Verlaufshilfsmittel, Sedimentationsverzögerer und Tixotropierungsmittel, wie zum Beispiel pyrogene Kieselsäure oder Silane können auch hier in wirksamer Menge Verwendung finden.

Die Beschichtungsdispersion kann weiterhin die schon in der DE 39 23 034 C2 beschriebenen Haftoxide oder Vorstufen derselben enthalten. Es handelt sich dabei um Metallverbindungen in der Form von Oxiden und/oder Silikaten und/oder Boraten, die unter 1000°C zur Glasbildung befähigt sind, und um Glasurfritten mit einer Halbkugeltemperatur unter 1000°C. Diese Stoffe können die Wirksamkeit und Standzeit der katalytisch wirksamen Beschichtung begünstigen. Sie werden bevorzugt in einer Menge unter jener des Nitrids, vorzungsweise in einer Menge von 5 bis 50 Gew.-% bezogen auf das Nitrid, eingesetzt. Ein geeignetes Haftoxid ist zum Beispiel Magnesiumoxid.

Als weitere Vorstufe eines Haftoxids kann eine organische Siliziumverbindung aus der Reihe der Orthokieselsäureester, der Organosilane mit ein bis drei hydrolysierbaren Gruppen am Si-Atom, insbesondere Trialkoxisilane, oder der Kondensationsprodukte der genannten monomeren Siliziumverbindungen, insbesondere der Poly(diorganosiloxane) und Poly(organoalkoxisiloxane) verwendet werden.

Das Verfahren kann zur Beschichtung unterschiedlicher Formkörper, wie Kugeln, Pellets, Schwämme, Monolithe oder Rohre, herangezogen werden. Besonders bevorzugt werden im BMA-Verfahren aber Reaktionsrohre und monolithische Wabenkörper mit parallelen Strömungskanälen eingesetzt. Bei diesen Formkörpern befindet sich die katalytisch wirksame Beschichtung auf den Innenwandungen der Rohre beziehungsweise der Strömungskanäle. Die Formkörper müssen gasdicht sein, das heißt sie dürfen keine offene Porosität aufweisen, und können aus allen bekannten keramischen Werkstoffen bestehen. Bevozugt werden Formkörper, die im wesentlichen aus α-Aluminiumoxid bestehen und herstellungsbedingt außer Aluminiumoxid in geringem Umfang andere Oxide enthalten können.

Die eigentliche Beschichtung erfolgt in an sich bekannter Weise manuell oder unter Verwendung geeigneter Beschichtungseinrichtungen durch Imprägnierung beziehungsweise Benetzung der zu beschichtenden Oberfläche mit der Dispersion und Abdampfen der Trägerflüssigkeit. Die in der US-PS 4,415,485 beschriebene Beschichtungsapparatur ist zum Beispiel für das vorliegende Verfahren geeignet. Nach Entfernen der überschüssigen Dispersion läßt man das Lösungsmittel verdunsten, zum Beispiel durch Erwärmen der Formkörper, durch Spülen mit einem Gas und/oder Vermindern des Drucks. Es können auch zuvor erwärmte Formkörper mit der Dispersion in Kontakt gebracht werden.

Nach erfolgter Beschichtung werden die Formkörper im BMA-Reaktor in Gegenwart von Stickstoff oder bevorzugt Ammoniak, oder Gemischen dieser Gase auf die für das BMA-Verfahren übliche Temperatur langsam, das heißt innerhalb mehrerer Stunden aufgeheizt.

Die Erfindung wird anhand der folgenden Beispiele verdeutlicht. Es wurden Rohre aus α-Aluminiumoxid auf ihren Innenwandungen mit katalytischen Beschichtungen nach dem erfindungsgemäßen Verfahren und nach konventionellen Verfahren beschichtet. Die Beschichtung erfolgte manuell durch Tauchen der Rohre in der Beschichtungsdispersion.

Die Rohre besaßen einen Innendurchmesser von 16 mm. Für Laboruntersuchungen wurden Rohre mit Längen von 0,5 m verwendet, die in einem elektrischen Röhrenofen zur Formierung des Katalysators und zur Cyanwasserstoffsynthese auf eine Maximaltemperatur von 1210°C aufgeheizt werden konnten. Parallel dazu wurden Produktionsrohre von 2,1 m Länge beschichtet und in einem mit Heizgasen befeuerten Produktionsreaktor formiert und bezüglich ihrer katalytischen Aktivität untersucht.

Die Katalysatorbeschichtungen der Labor- und Produktionsrohre wurden jeweils in 20 Stunden formiert. Hierzu wurden die Rohre in 12 Stunden von Raumtemperatur auf eine Maximaltemperatur aufgeheizt und für weitere 8 Stunden auf dieser Temperatur gehalten.

### Vergleichsbeispiel 1

Es wurde eine konventionelle Beschichtungsdispersion in Anlehnung an DE 39 23 034 C2 aus Aluminium- und Platinpulver mit einem Atomverhältnis Al : Pt von 10 : 1 hergestellt.

Hierzu wurden 105 g einer 40 %igen Degalan®-Lösung mit 2,1 g Aerosil® (flammenhydrolytisch hergestellte Kieselsäure), 60 g Phenyl-Ethyl-Polysiloxan (PEPS) in 240 ml Toluol dispergiert. Zu dieser Dispersion wurden 166 g Aluminiumpulver (mittlerer Korndurchmesser < 60 µm) gegeben und dispergiert. Die benötigte Menge von 120 g Platinpulver (mittlerer Korndurchmesse < 60 µm, Reinheit > 98,5 %) wurden in weiteren 160 ml Toluol dispergiert und portionsweise zu der aluminiumhaltigen Dispersion zugegeben. Danach wurde für weitere 5 Minuten dispergiert. Die so erhaltene Dispersion ist über mehrere Wochen ohne Gefahr der Entmischung lagerbar.

Diese Dispersion wurde benutzt, um die Innenwandungen eines 0,5 m langen Rohres durch Tauchen zu beschichten. Durch einmaliges Beschichten konnten 3,5 g der Dispersion (Trockenanteil) auf der Innenwandung des Rohres abgeschieden werden. Zur Formierung des Katalysators wurde das Rohr in einem elektrischen Röhrenofen von Raumtemperatur in 12 Stunden auf 1210°C aufgeheizt und für weitere 8 Stunden auf dieser Temperatur gehalten. Während der gesamten Dauer wurde das Rohr von einem Ammoniakfluß von 3 mol/h durchströmt.

Nach Abschluß der Formierung wurde mit der Cyanwasserstoffsynthese begonnen. Hierzu wurde Methan mit langsam steigendem Massenstrom zugegeben, um die Bildung von Ruß und damit die Desaktivierung des Katalysators zu verhindern. Erst nach vier Tagen war der Methanstrom des stationären Betriebs von 2,7 mol/h entsprechend einem Molverhältnis Methan/Ammoniak von 0,9 erreicht.

Im stationären Betrieb betrug die Ausbeute für Cyanwasserstoff bezogen auf Methan 78 %, so daß mit den Rohr pro Stunde 56,9 g Cyanwasserstoff hergestellt werden konnten.

### Beispiel 1

Es wurde eine Beschichtungsdispersion aus Aluminiumnitridpulver und Platinpulver mit einem Atomverhältnis Aluminium/Platin von 10 : 1 hergestellt. Die Herstellung erfolgte analog zu Vergleichsbeispiel 1. Statt der 166 g Aluminiumpulver wurden jedoch 252 g Aluminiumnitridpulver (mittlerer Korndurchmesser < 60 µm; Reinheit > 98 %) verwendet.

Diese Beschichtungsdispersion wurde benutzt, um ein 0,5 m langes Rohr aus α-Aluminiumoxid mit einem Katalysator zu beschichten, zu formieren und seine katalytische Aktivität zu prüfen. Die Beschichtungsmenge betrug 3,2 g Trockensubstanz.

Bei der Formierung und Prüfung wurde genau wie im Vergleichsbeispiel 1 vorgegangen. Die Methanzugabe konnte jedoch schon nach 6 Stunden abgeschlossen werden, ohne daß eine Rußbildung beobachtet wurde.

Im stationären Betrieb (3 mol/h Ammoniak; 2,7 mol/h Methan, 1210°C) betrug die Ausbeute für Cyanwasserstoff bezogen auf Methan 82 %, so daß mit dem Rohr pro Stunde 59,8 g Cyanwasserstoff hergestellt werden konnten.

### Beispiel 2

Es wurde Beispiel 1 wiederholt. Jedoch wurde das Aluminiumnitridpulver durch 154 g Bornitrid ersetzt (Atomverhältnis Bor/Platin: 10 : 1) und die Menge an verwendetem Toluol auf insgesamt 620 ml erhöht. Das Bornitrid besaß einen mittleren Korndurchmesser von < 10 µm und eine Reinheit von > 95 %). Die Beschichtungsmenge auf der Innenwandung des Rohres betrug 3,7 g Trockenanteil.

Nach der Formierung konnte die Methanzugabe innerhalb von 4 Stunden abgeschlossen werden. Im stationären Betrieb (3 mol/h Ammoniak; 2,7 mol/h Methan, 1210°C) betrug die Ausbeute für Cyanwasserstoff bezogen auf Methan 67 %, so daß mit dem Rohr pro Stunde 48,8 g Cyanwasserstoff hergestellt werden konnten.

### Beispiel 3

Es wurde Beispiel 1 wiederholt. Jedoch wurde das Aluminiumnitridpulver durch 382 g Titannitrid ersetzt (Atomverhältnis Titan/Platin: 10 : 1) und die Menge des verwendeten Toluols auf 590 ml erhöht. Das Titannitrid besaß einen mittleren Korndurchmesser von < 10 µm und eine Reinheit von > 95 %). Die Beschichtungsmenge betrug 3,4 g Trockenanteil.

Nach der Formierung konnte die Methanzugabe innerhalb von 5 Stunden abgeschlossen werden. Im stationären Betrieb (3 mol/h Ammoniak; 2,7 mol/h Methan, 1210°C) betrug die Ausbeute für Cyanwasserstoff bezogen auf Methan 52 %, so daß mit dem Rohr pro Stunde 37,1 g Cyanwasserstoff hergestellt werden konnten.

### Beispiel 4

Es wurde Beispiel 1 wiederholt. Jedoch wurde das Aluminiumnitridpulver durch 282 g Siliziumnitrid ersetzt (Atomverhältnis Silizium/Platin: 10 : 1) und die Menge des verwendeten Toluols auf 590 ml erhöht. Das Siliziumnitrid besaß einen mittleren Korndurchmesser von < 25 µm und eine Reinheit von > 90 %). Die Beschichtungsmenge betrug 2,9 g Trockenanteil.

Nach der Formierung konnte die Methanzugabe innerhalb von 7 Stunden abgeschlossen werden. Im stationären Betrieb (3 mol/h Ammoniak; 2,7 mol/h Methan, 1210°C) betrug die Ausbeute für Cyanwasserstoff bezogen auf Methan 75 %, so daß mit dem Rohr pro Stunde 54,7 g Cyanwasserstoff hergestellt werden konnten.

### Vergleichsbeispiel 2

Es wurde ein 2,1 m langes Keramikrohr mit der konventionellen Beschichtungsdispersion von Vergleichsbeispiel 1 beschichtet. Nach dem Abdampfen der Trägerflüssigkeit wurde die Formierung des Katalysators in einem mit Heizgasen befeuerten Ofen vorgenommen. Hierzu wurde das Rohr von 32 mol/h Ammoniak durchströmt und in 12 Stunden von Raumtemperatur auf 1320°C aufgeheizt und für weitere 8 Stunden bei dieser Temperatur gehalten. Danach erfolgte die Methanzugabe bis zu 29,5 mol/h Methan (Molverhältnis Methan/Ammoniak: 0,92). Zur Vermeidung von Rußbildungen konnte die Endbelastung des Rohres mit Methan erst nach 9 Tagen erreicht werden.

Im stationären Betrieb (32 mol/h Ammoniak; 29,5 mol/h Methan, 1320°C) betrug die Ausbeute für Cyanwasserstoff bezogen auf Methan 78 %, so daß mit dem Rohr pro Stunde 725,8 g Cyanwasserstoff erzeugt werden konnten.

### Beispiel 5

Es wurde ein 2,1 m langes Keramikrohr mit der Beschichtungsdispersion von Beispiel 1 beschichtet und wie im Vergleichsbeispiel 2 beschrieben formiert. Die Methanzugabe bis auf 29,5 mol/h Methan konnte schon nach 7 Stunden abgeschlossen werden, ohne daß Rußbildung auftrat.

Die Ausbeute für Cyanwasserstoff bezogen auf Methan betrug im stationären Betrieb (32 mol/h Ammoniak; 29,5 mol/h, 1320°C) 86 %, so daß mit dem Rohr pro Stunde 743,0 g Cyanwasserstoff erzeugt werden konnten.

### Beispiel 6

Es wurde Beispiel 5 wiederholt. Abweichend von Beispiel 5 wurde die Formierung jedoch nur bei einer maximalen Temperatur von 1270°C vorgenommen. Die Methanzugabe konnte schon nach 6 Stunden abgeschlossen werden.

Im stationären Betrieb (32 mol/h Ammoniak, 29,5 mol/h Methan; 1270°C) betrug die Ausbeute für Cyanwasserstoff 89 %, so daß mit dem Rohr pro Stunde 769 g Cyanwasserstoff hergestellt werden konnten. Dies sind 6 % mehr als nach Vergleichsbeispiel 2, obwohl die Reaktionstemperatur um 50°C unterhalb der Reaktionstemperatur von Vergleichsbeispiel 2 lag.

Die vorstehenden Beispiele zeigen, daß die erfindungsgemäß hergestellten Katalysatoren nach der Formierung unter hoher Last wesentlich schneller mit dem Methanstrom des stationären Betriebs belastet werden können als konventionell hergestellte Katalysatoren. Im Falle der 2,1 m langen Produktionsrohre kann die Methanzugabe bei den erfindungsgemäß hergestellten Katalysatoren in weniger als einem dreißigstel der Zeit abgeschlossen werden, die bei konventionell hergestellten Katalysatoren benötigt wird. Zusätzlich werden höhere Ausbeuten bei geringeren Reaktionstemperaturen erzielt.

Konventionell hergestellte Katalysatoren zeigen nach ofenbedingten Betriebsunterbrechungen häufig eine verminderte katalytische Aktivität. Dies konnte bei den erfindungsgemäß hergestellten Katalysatoren nicht beobachtet werden. Sie erreichen nach Betriebsunterbrechungen sehr schnell wieder ihr ursprüngliches Aktivitätsniveau.

## Patentansprüche

1. Verfahren zur Herstellung katalytisch wirksamer Beschichtungen auf der Oberfläche von keramischen Formkörpern für die Synthese von Cyanwasserstoff aus Kohlenwasserstoff und Ammoniak durch gleichmäßiges Benetzen der Formkörper mit einer Beschichtungsdispersion, welche mindestens ein teilchenförmiges elementares Platinmetall und eine weitere Beschichtungskomponente in einer Trägerflüssigkeit enthält, Abdampfen der Trägerflüssigkeit und Überführen der Beschichtung in den katalytisch wirksamen Zustand durch langsames Aufheizen in Gegenwart von Stickstoff und/oder Ammoniak auf 1000 bis 1350°C
**dadurch gekennzeichnet,**
daß als weitere Beschichtungskomponente teilchenförmige Nitride mit den Elementen Aluminium, Bor, Titan und Silizium als Kationen allein oder in Mischung verwendet werden, wobei die teilchenförmigen Komponenten mittlere Teilchendurchmesser von im wesentlichen weniger als 100 µm aufweisen.

2. Verfahren nach Anspruch 1,
**dadurch gekennzeichnet,**
daß das Atomverhältnis Platinmetalle/Kationen im Bereich zwischen 0,001 und 1 gewählt wird.

3. Verfahren nach einem der Ansprüche 1 bis 2,
**dadurch gekennzeichnet,**
daß man als Trägerflüssigkeit organische Lösungsmittel oder Lösungsmittelgemische verwendet, vorzugsweise aliphatische oder aromatische Kohlenwasserstoffe, Ester, Ketone, Ether oder Alkohole oder Gemische solcher Lösungsmittel.

4. Verfahren nach einem der Ansprüche 1 bis 3,
**dadurch gekennzeichnet,**
daß die Dispersion als Platinmetall Platin enthält und das Atomverhältnis Platin zu Kationen 0,01 bis 0,5, insbesondere 0,01 bis 0,1 beträgt.

5. Verfahren nach einem der Ansprüche 1 bis 4,
**dadurch gekennzeichnet,**
daß die Dispersion 10 bis 300 Gew.-%, bevorzugt 30 bis 200 Gew.-% und insbesondere 50 bis 150 Gew.-% Platinpulver und Nitridpulver, bezogen auf die Trägerflüssigkeit, enthält.

6. Verfahren nach einem der Ansprüche 1 bis 5,
**dadurch gekennzeichnet,**
daß die dispergierten Edelmetall- und Nitridteilchen einen Teilchendurchmesser unter 50 µm aufweisen.

7. Verfahren nach einem der Ansprüche 1 bis 6,
**dadurch gekennzeichnet,**
daß die Dispersion Haftoxide oder Vorstufen der Haftoxide enthält.

8. Verfahren nach Anspruch 7,
**dadurch gekennzeichnet,**
daß die Dispersion als Vorstufe eines Haftoxids eine organische Siliziumverbindung aus der Reihe der Orthokieselsäureester, der Organosilane mit ein bis drei hydrolysierbaren Gruppen am Si-Atom, insbesondere Trialkoxisilane, oder der Kondensationsprodukte der genannten monomeren Siliziumverbindungen, insbesondere der Poly(diorganosiloxane) und Poly(organoalkoxisiloxane), enthält.

9. Verfahren nach einem oder mehreren der Ansprüche 1 bis 8,
**dadurch gekennzeichnet,**
daß die Dispersion Metallverbindungen, insbesondere Oxide und/oder Silikate und/oder Borate in unter 1000°C zur Glasbildung befähigter Zusammensetzung und/oder Glasurfritten mit einer Halbkugeltemperatur unter 1000°C enthält, wobei Glasurfritten bevorzugt sind.

10. Verfahren nach Anspruch 9,
**dadurch gekennzeichnet,**
daß die Metallverbindungen und/oder Glasurfritten in einer Menge unter jener des Nitrids, vorzugsweise in einer Menge von 5 bis 50 Gew.-% des Nitrids, anwesend sind.

11. Verfahren nach einem oder mehreren der Ansprüche 1 bis 10,
**dadurch gekennzeichnet,**
daß die Dispersion zusätzlich organische polymere Bindemittel, enthält.

12. Verfahren nach einem oder mehreren der Ansprüche 1 bis 11,
**dadurch gekennzeichnet,**
daß die auf die Oberfläche des Formkörpers mit der Dispersion aufgebrachte Menge Platinmetall zu einer Flächenkonzentration von unter 10 mg/cm², vorzugsweise 0,1 bis 5 mg/cm² und insbesondere 0,5 bis 2 mg/cm², führt.
